# EUROPEAN PATENT APPLICATION

(11) **EP 2 327 873 A1**
(43) Date of publication of application: **01.06.2011**
(21) Application number: 11157199.8
(22) Date of filing: 30.04.2007
(51) Int. Cl.: F03B 13/26, F03B 11/06, F03D 11/00

(54) **TIDAL CURRENT TURBINE**

(30) Priority: 28.04.2006 GB 0608367; 28.04.2006 GB 0608467; 15.01.2007 GB 0700679; 20.02.2007 GB 0703230
(62) Divisional of application: 07732605.6
(71) Applicant: Swanturbines Limited, West Glamorgan SA2 8PP (GB)
(72) Inventor: Orme, James, Swansea, West Glamorgan SA2 8PP (GB); Masters, Ian, Swansea, West Glamorgan SA2 8PP (GB)
(74) Representative: Baker, Thomas Edward

(57) **Abstract**

The present invention relates to a marine turbine and variety of aspects relative thereto. Renewal energy systems have recently been understood to be a necessary energy source, and tidal power is a particularly useful source as it is generally not visible and has a limited ecological impact. The present invention relates to a system for converting the kinetic energy of flowing fluid into electrical energy comprising a turbine having a low speed electricity generator and a braking means for controlling the speed of rotation of the shaft. The present invention also extends to a nacelle for housing a number of components of a turbine wherein the nacelle has cover for selectively opening and closing the aperture to the nacelle in order to provide a substantially watertight seal therebetween. The invention also extends to an apparatus for converting energy of a flowing fluid into electrical energy comprising a nacelle having a turbine therein and a lifting means providing a lifting means providing a load flow path between the lifting point, the nacelle and the turbine. A further advantage of the present invention is the ability to easily locate and remove new marine turbine from a useable location. There is therefore provided a turbine and support fixing to the ground, the turbine and support comprising complimentary male and female engaging portions such that when the turbine is lowered onto the support, the male and female portions contact therefore providing an operational engagement therebetween.

## Description

With the increasing awareness of the effects of the use of traditional energy forms for power production and the reducing supply of fossil fuels, renewable energy is becoming an increasingly important field of engineering development.

Global warming is an issue that is firmly in the public eye, burning fossil fuels lead to the production of carbon dioxide and other pollutants. The public awareness of this threat has lead to legislation in many countries and worldwide with the Kyoto agreement. This, combined with the finite supply of fossil fuel, has lead to a strong market force for non polluting energy from renewable energy sources.

However, renewable systems that are currently being implemented include wind, tidal and solar, however, there is still an environmental impact of renewable energy systems. The aim of using renewable energy is to protect the environment, it is therefore frowned upon when entire eco-systems are wiped out, such as can happen with traditional, large hydro-electric dam systems.

However, tidal power could go a long way to solving many of these problems:
· Tides are predictable, it is accurately known when tides will flow, for how long and at what speed.
· Tidal flow turbines would not be seen, most of a marine turbine installation would be below water and so would not create an impact on the scenery.
· Tidal turbines should have limited ecological impact. There is no need to build large dams or other manmade structures with a zero head turbine system. The effect on marine life is not fully known but should be minimal with considerate design.
· The tidal stream has the potential to supply a significant amount of Britain's energy demand.

Although the concept of harnessing the sea's power has been around for over a century, the field of tidal flow turbines is still a relatively undeveloped area. The challenge of the hostile marine environment and transmission of the captured power to energy users have proven difficult challenges in the past. Known arrangements in the field are, for example as disclosed in WO 2005/057006, turbines positioned in flowing water locations where the turbine is submerged reducing the visual impact. However, such turbines are highly susceptible to their environment, and as such require regular maintenance.

According to a first aspect of the present invention, there is a system for converting the kinetic energy of flowing fluid into electrical energy, said system comprising a turbine having a low speed energy electricity generator, a shaft in communication with said generator, wherein a plurality of blades are fixable to said shaft, wherein said fluid flow acts to cause rotation of said blades and thus said shaft, said system further comprising a braking means for controlling the speed of rotation of said shaft.

Benefits afforded by such an arrangement as disclosed in the first aspect of the present invention are associated with an improved energy connector whereby a low speed electricity generator may be utilised thereby eliminating the need for a gearbox and as such increasing the efficiency of the drive train. However, with the improvement of using such an arrangement comes the problem of the rotor rotating at uncontrollable speed. Thus, a braking means is preferably utilised.

The braking means preferably comprises a friction brake disc mounted onto the rotating element of the generator, however it will be appreciated that numerous braking mechanisms could be utilised. The rotating element of the generator is preferably the rotor. The brake disc preferably extends generally perpendicular to the axis of rotation of the shaft. The rotor preferably comprises a generally "T" shaped cross section.

The system preferably further comprises a brake caliper arranged and configured to contact the brake disc. The rotor is preferably located in an area defined by the rotor and the shaft. It will be appreciated that in such a configuration, the braking means is located within the area comprising the rotor and shaft and as such thereby reduces the overall size of the system and the length of the shaft.

According to a second aspect of the present invention, there is a nacelle for housing a plurality of components of a turbine in a marine environment, the nacelle having an aperture therein for receiving said components and a cover for selectively opening and closing said aperture to said nacelle in order to provide a substantially watertight seal therebetween.

The blades of the turbine preferably extend from the internal cavity of the nacelle through a wall of the nacelle. Benefits of such an arrangement are significant, in particular regarding the strength as longitudinally running seams or joints on the vessel are not essential, thereby reducing the chances of water ingression and gas escaping. Additionally, this provides a simple way of taking apart the arrangement for maintenance purposes for example.

A turbine generally comprises a shaft with blades at one end and electromagnets at the other, such that the magnets spin fast when a force is applied against the blades. The magnet end is usually surrounded by heavy coils of copper wire, and the spinning magnets cause electrons in the wire to move, thereby providing useful electricity.

The rotary shaft preferably extends from the generating means through the housing cover.

The rotary shaft is preferably linked to a direct drive generator, thereby providing an arrangement that does not require a gearbox that reduces efficiency of the system. The shaft is preferably a single piece thereby reducing the chance of failure and reducing production costs. Beneficially, a braking means is arranged and configured to control the speed of rotation of the shaft. The generating means and braking means are preferably located between two sets of bearings arranged to withstand the loads of the generator-rotor arrangement.

When the cover is attached to the housing, the enclosure preferably contains a gas such as nitrogen or gas mixture such as air. The vessel is preferably substantially cylindrical in shape, and may comprise a composite material or alternatively a metallic material.

The turbine preferably further comprises a hydrodynamic member attachable to either or both ends of the housing to the blades which is arranged to reduce drag on the system.

A supporting member is preferably provided, arranged to connect said housing to said generating means. This is particularly beneficial during maintenance or installation.

Sealable apertures are preferably provided within the housing, arranged to enable access to equipment within the housing.

The cover is preferably a truncated pyramidal shape, and may comprise a plurality of sheets of material. The cover is preferably made of a thermally conductive material, which provides good heat exchange properties with the surrounding fluid.

A sealing system may be provided between the cover and the shaft in order to prevent ingress of fluid into the vessel. The sealing system may drain to a sump, wherein the sump may further comprise a pump for evacuating the seal of any fluid that may have ingressed.

The present invention may also extend to include a structure for supporting a turbine in said fluid flow, wherein said support comprises means to releasably attach to said turbine and comprises means to enable yaw of said turbine relative to said support structure.

According to a third aspect of the present invention, there is an apparatus for converting kinetic energy of flowing fluid into electrical energy, said apparatus comprising a nacelle having a turbine generally contained therein, said apparatus further comprising a lifting means for connection to a lifting apparatus for relocation of said apparatus, said lifting means arranged and configured to provide a load flowpath between a lifting point, said nacelle and said turbine.

The lifting means preferably comprises a rigid member linking the nacelle, turbine and lifting point. This means the weight of the structure can be raised through the lifting point only.

The housing preferably comprises a cover for releasably attaching to a receptacle. The support includes a spacer arranged to locate between the generating means and the housing.

According to a fourth aspect of the present invention, there is a structure for supporting a turbine in location to convert the kinetic energy of fluid flow to electrical energy, said support comprising a base portion and a support member extending from said base member for supporting said turbine, wherein said base member includes a recessed portion for receiving ballast material for retaining said structure in said location.

The support member preferably comprises a recessed portion at the distal end for receiving said turbine.

The base member is fixedly attached to the ground. The ballast material may comprise scrap steel, concrete, slag or any other alternative high density material. The support structure may further comprise a skirt portion extending from said base member, said skirt portion arranged to co-act with the ground and thus reduce erosion from the ground surrounding the base member.

It is beneficial to locate turbines onto the sea bed which removes the apparent eyesore associated with wind turbines, allowing a large number of turbines to be positioned in optimum tidal areas without being generally visible. However, this provides difficulties in that the mechanisms by which the turbines are connected to the sea bed must be able to withstand severe weather conditions. Known arrangements may be attached to the sea bed, however when maintenance is required, divers must be employed to carry out any inspections required and repair necessary which is both costly and inconvenient. A further aspect of the present invention aims to overcome these problems.

According to a fifth aspect of the present invention, there is a turbine and support for fixing to the ground, said turbine and support comprising complementary male and female engaging portions such that when the turbine is lowered onto the support, the male and female portions contact thereby providing an operational engagement therebetween.

The advantage of such an arrangement is that when inspection or repair is required, the support means and turbine may be lifted from the base structure with little or no skill or expertise, and lifted onto, for example, a boat. If necessary, the active turbine may be taken to a suitable location for examination and/or repair. Additionally, when locating or removing the turbine from the support, divers or motorised means will not be required to release the turbine from the support, reducing costs associated with service, which can be substantial in such a harsh environment. 'Operational engagement' is defined through this specification and within the claims as being in a fit state for use without further assembly. Generally, this will be through the action of gravity. However, it will be appreciated that further fixing clamps/bolts could be included dependent on specific requirements such as the conditions in which the turbine is located, but in general all foreseeable loads are resisted.

Preferably, the female engaging portion comprises a socket, the internal configuration of the socket being generally conical shaped, the greatest cross sectional area of the cone being at the rim of the socket. Even more specifically, the internal configuration of the socket has a decreasing diameter from the rim, comprising a frustoconical, cylindrical and conical configuration respectively. The support preferably further comprises an elongate member and a base member arranged and configured to be secured to the ground. The ground may include any surface, although in a specific example refers to the sea bed.

There may be further provided a spacing means on at least a portion of the outer surface of the male engaging portion, arranged and configured when in use to aid location of the male engaging portion into the female engaging portion. The spacing means enables improved engagement for misalignment tolerances and acts to generally (unless too great a rotational force or alternatively a force acting upwards to remove the plug from the socket) to prevent relative rotation or movement between the plug and the socket. The spacing means preferably comprises a compressible material such as rubber. Alternatively, the female portion may be shaped and configured to receive the male portion in a specific orientation. An example of such a shape would be a splined configuration.

The male engaging portion preferably comprises a rotatably mounted member arranged to fixedly connect to the turbine. A set of bearings is preferably located between the rotatably mounted member and the inner surface of the male engaging portion. There may additionally be provided a motive means within said male engaging portion arranged to rotate the turbine. This is particularly useful when the turbine must be rotated within the fluid flow to optimise energy transfer. The set of bearings is preferably mounted concentrically relative to the spacing means. The spacing means (which can also be termed as a set of bearings) have different friction characteristics to the first set of bearings, wherein the spacing means have a higher friction coefficient than the bearings such that movement of the turbine in the fluid flow is enabled in the bearings, and not between the male and female engaging portion.

Also according to a fifth aspect of the present invention, there is a method of locating a turbine in position for energy transfer, comprising the steps of:
- positioning a support onto the ground; and
- lowering a turbine onto said support, said turbine and support comprising complementary male and female engaging portions;
such that when the engaging portion of the turbine is lowered onto the engaging portion of the support, the male and female engaging portions operationally engage.

The present invention will now be described by way of example only with reference to the accompanying drawings, in which:
Figure 1 is a schematic side view of a system for generating electricity from fluid flow according to an exemplary embodiment of the present invention.
Figure 2 is a detailed schematic side view of a turbine according to an exemplary embodiment of the present invention.
Figure 2a is a schematic view of the braking system of a turbine according to an exemplary embodiment of the present invention.
Figure 3 is a schematic side view of an exemplary embodiment of a foundation system for the turbine as shown in Figure 2.
Figure 4 is a schematic plan view of the foundation structure according to an exemplary embodiment of the present invention.
Figure 5a and b is a schematic side view of the system according to the present invention, and additionally the means by which the turbine is located into position.
Figure 6 is a schematic side view of side view the base support, including the socket and plug inserted therein.
Figure 7a-g are schematic side views of seven plug arrangements showing differing motor arrangements available for location therein.

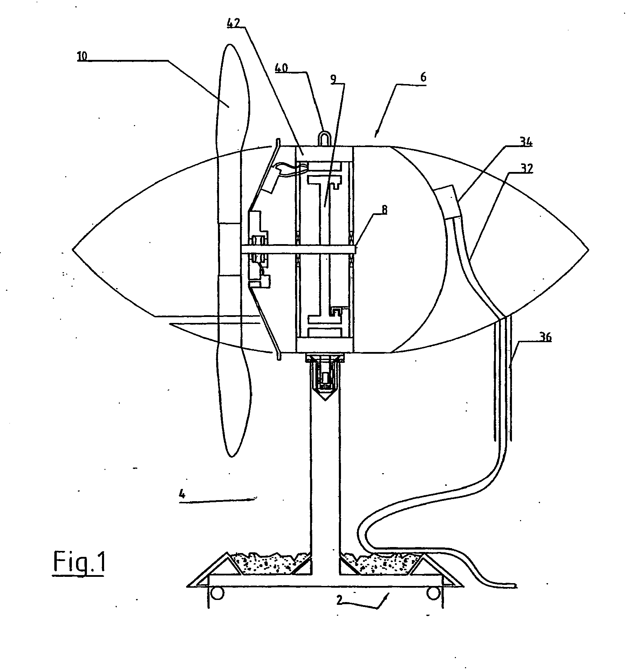

Referring in particular to Figure 1, the system could consist of a flat base 2 with a structure 4 protruding from the base 2. The diagrams indicate an upstream configuration, however a downstream configuration with blades downstream of the vertical support is equally possible. At the top of this structure 4, attached by a connecting system (enabling rotation therebetween) or other means such as bolting or welding is a nacelle 6 holding electrical power generation equipment 9. The connecting mechanism allows the nacelle to rotate relative to the base, whilst providing a secure easily connectable joint. Outside of the nacelle 6, attached to the power generation equipment via a shaft 8 is a hub holding rotor blades 10, of fixed or variable pitch design, or of a complex aerofoil shape with variable chord and twist, that are made to rotate by the flowing fluid. This rotation is transmitted to the generation equipment by the shaft 8 and useable power is produced.

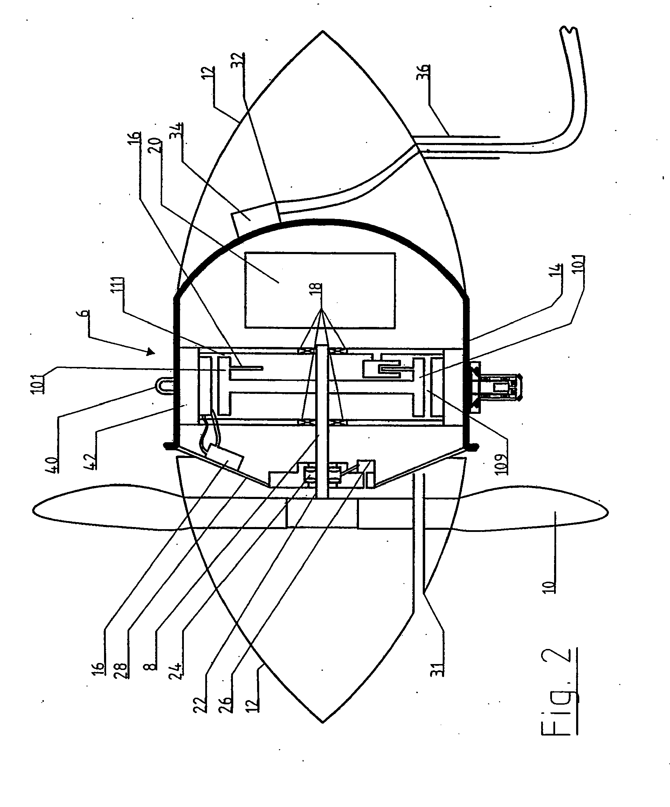

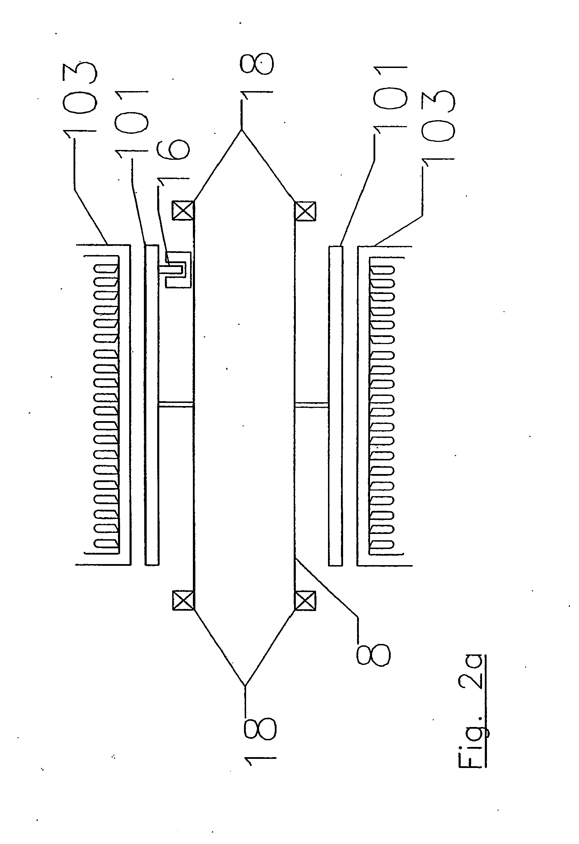

Referring to Figure 2 which shows the nacelle 6 in more detail, the nacelle 6 comprises two main areas. Firstly, there is a hydrodynamic member 12 which is open to the surrounding environment (thus fluid filled thereby not adding to the buoyancy of the apparatus) and gives a hydrodynamically efficient shape to the nacelle 6, (on both front and rearward side) and secondly a pressure vessel 14 which is watertight and maintains the electricity generation equipment in dry surroundings. The pressure vessel may be made of a composite material such as glass filament wound reinforced plastic, or alternatively may be made of a metallic material such as aluminium. The pressure vessel 14 is created with one large flanged hole at one end of a cylinder and could be torospherical in shape at the opposite end. The torospherical end could include small hatches (not shown) to facilitate access during building and maintenance that can be made watertight during operation. Designing the pressure vessel in this way means that there is no horizontal split in the nacelle and so no leakage will result from a split. To further reduce leakage, the design is such that no holes for structural fixings will penetrate the entire thickness of the pressure vessel.

The pressure vessel 14 contains an electrical generator that is driven directly from the rotor blades. The rotating member of the generator may comprise a rim attached to a hub on the shaft via spokes (not shown). It follows from this that the shaft 8 onto which the turbine rotor and generator are mounted can be a single piece. A circular flange 16 which operates as a friction brake disk can be incorporated into the outer rim of the rotor of the electrical generator so that the generator and braking system is held between two bearing sets 18. A significant advantage of this invention is found in the ability to use a large diameter marine turbine without the requirement for use of a gearbox. Using such a large diameter turbine enables the rotor 101 to be very large (i.e. few metres diameter) and additionally be relatively short in length. The rotor 101 may be connected to the shaft 8 in a number of ways, one possibility being a plate or a set of spokes at the mid point of the rotor 101. The consequence of this is a large diameter of empty space between rotor and shaft. This is seen clearly in Figure 2a, wherein rotation of the rotor 101 causes a flow of electrons through the wire in the stator thereby producing electricity. A circular flange disc 16 can be attached to the inside rim of the rotor 101 facing generally towards the shaft 8 and a brake caliper may be provided around this disc. It will be appreciated that the caliper is for safety only and is not required during normal operation of the apparatus. It is a failsafe, with spring closing held open with hydraulics for example as used on passenger lift shafts.

The braking system comprises any known pads pushed into contact with the circular flange 16 to control rotation of the shaft. The rotor of the generator could either be of a solid design or could be constructed of a rim and radially tensioned spoke arrangement for larger devices. Behind the generator there is space 20 for the control, backup power storage and power handling equipment necessary for the device. The advantage of this positioning of the disc relative to the shaft is that the high torques on the shaft during operation are resisted without an excessively large caliper unit. The main shaft is also substantially shorter than if a separate brake assembly is used which is more economic and reduces the volume of gas in the nacelle. This is a significant advantage as gas within the nacelle produces a buoyant volume which makes locating the nacelle in location in the seabed difficult. Know prior art arrangements which use gearboxes convert a low speed shaft into a high speed shaft and a brake is provided relative to the high speed shaft. This arrangement is commonly used in wind turbines, and is not advantageous for a marine turbine due to the size restraints particularly relating to buoyancy issues.

The shaft 8 protrudes from the pressure vessel at the open end 22. A bearing and sealing arrangement 24 attached to a section of a front plate is mounted to the shaft 8. The sealing arrangement could drain to a sump 26 which may include means of evacuation of fluid that is leaked from the external environment, such as a pump mechanism. In one embodiment however, the nacelle is open to the environment and as such sealing systems are not required. This provides an advantage of simplicity and reduced buoyancy, however results in severe marine growth and wear. A truncated cone shaped annulus 28 attaches to the front plate at the cone's inner radius and the flanged surface (not shown) of the pressure vessel at its rim. The annulus 28 locks to the rim of the pressure vessel by a plurality of nuts and bolts, which may be attached through corresponding flanges on the pressure vessel rim and the rim of the annulus 28. The inner radius of the truncated cone is of sufficient diameter so that any flange permanently attached to the shaft can pass through it. This allows for removal of the cone without removing the seal or bearings from the system, allowing access for maintenance purposes. The cone shaped annulus 28 is preferably made of a thermally conductive material and may be in thermal contact with a cooling system 30 for the generator inside the pressure vessel. This plate is then able to act as a heat exchanger. The hydrodynamic member 12 may contain ducting 31 arranged to direct fluid flow to pass across the surface of the front plate to increase cooling efficiency. The heat transfer mechanism is therefore located within the nacelle 6 and therefore does not have fins that would attract bio-fouling. The heat transfer mechanism is attached to a metal plate (not shown) rather than the pressure vessel itself. Locating the heat exchanger in this location protects the exchanger from damage.

The stator, when in use, gets hot and heat is removed to the cooling system mounted on the front plate by means of a water cooling system that uses a helical pipe embedded in the generator structure next to the core.

The generator and bearing arrangement is mounted on a solid base which is attachable to the inside of the nacelle via suitable rigid mountings. A gap is provided above the generator in the nacelle 6 to allow clearance for lifting equipment during the insertion of the generator arrangement into the pressure vessel. After installation, this gap is filled by a rigid member which is securely fixed to both the generator assembly and the nacelle hence providing a rigid connection between the two. The nacelle is pressurised above atmospheric pressure, having the advantage of a high heat co-efficient which can be augmented by the provision of an air pump to force air through the gap 109 between rotor and stator and also through aperture 111.

An umbilical cable 32 exits from the rear of the nacelle into the space between the nacelle and outer shell, where a system to disconnect the cable can be mounted 34. The cable 32 then exits from the rear of the outer shell at a distance that is sufficiently far from the rotor blades to prevent collision. A cable guide system 36 or anchor, which constrains movement of the cable in certain directions, could be placed between the nacelle and base. This system could be similar in design to chain link tracking as used on cabling for linear drive systems. There should be sufficient slack cable on the base to ensure that the device can yaw through 180 degrees so that the nacelle can be retrieved to the surface before the cable is disconnected. Finally, the cable is secured to the base and laid along the seabed in the usual manner known from the prior art.

The lifting mechanism of the arrangement is also shown with respect to Figures 1 and 2. A lifting member 40 is located outside the pressure vessel 14, located above the centre of gravity of the nacelle 6 (including the rotors and means to connect to the base 2). The load, rather than being transferred through the shell vessel 14, is transferred through a support 42 which locates between the generator and the pressure vessel 14. As the vessel 14 is one piece, and therefore the generating means is located into the vessel 14 from one end, there must be sufficient clearance between the top of the generator and the vessel 14. The generator is therefore inserted into the vessel 14. The support 42 is then fixedly positioned between the vessel 14 and generator through an access hatch in the rearward torospherical end of the vessel 14, which thereby provides a path for lifting the system via lifting member 40. A suitable hatch covers the access aperture to the torospherical end of the vessel 14.

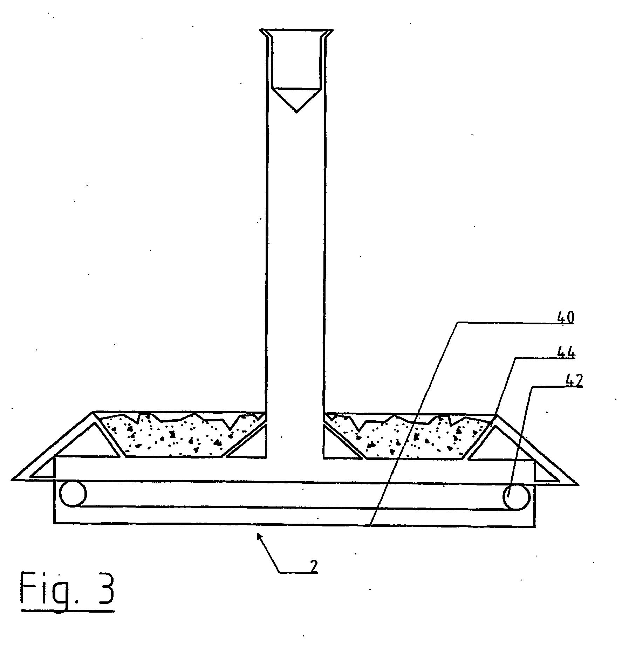

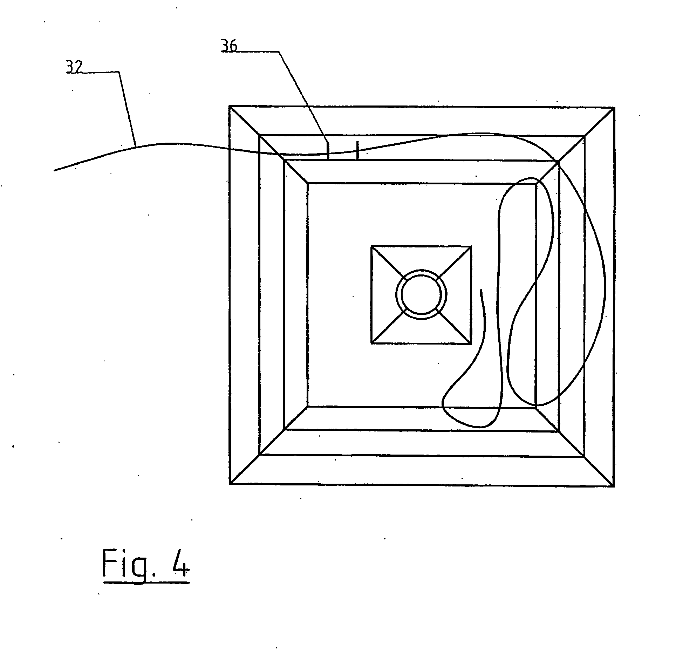

Referring to Figures 3 and 4, the gravity base 2 could be constructed from a combination of bi-steel and concrete or similar ballast materials. The base has sufficient plan area to resist overturning moments and has sufficient weight to resist shear movement along the seabed. Weight is provided by a concrete fill or addition of ballast to the base. The design of the base could incorporate a scour curtain 40 on the underside that would dig into the seabed in suitable sites. The base could also be placed upon grout bags 42 to improve the contact between base and seabed. In other locations the base could be bolted on to the seabed to improve stability. Above the flat base 46, a sloped or vertical boundary 44 could be constructed to create a hopper to hold ballast composed of scrap iron, waste such as slag, concrete surrounding material or any other low cost, high density material.

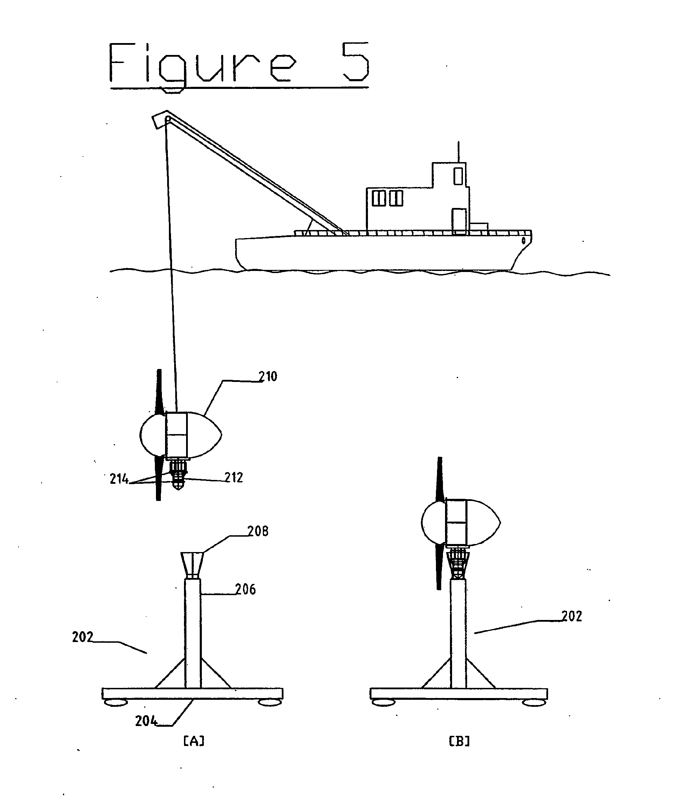

Referring to Figure 5a and b, there is a schematic side view of an embodiment of the present invention which shows the implementation of the present invention. The arrangement comprises a base 202, such as a steel substructure which can be installed into the desired location. The base preferably only comprises components that do not require servicing, and as such may be fixedly attached in location, such as on the sea bed. The base 202 comprises a generally flat member 204 which extends parallel to the sea bed, and an elongate member 206 extending at substantially 90° therefrom. This elongate member 206 is fixedly attached to the flat member 204, and comprises a recess (socket) 208 for receiving a turbine nacelle 210 or similar. The socket 208 is generally of increasing diameter, and in a preferred embodiment, comprises from the elongate member to upwards, a conical section, a cylindrical section and a frustoconical section. This configuration provides relatively easy location of a plug 212 onto which is mounted a turbine nacelle 210 into the base 202 as indicated in Figure 5a, in particular where currents are likely to be present. The angles of the plug 212 to socket 208 interface are chosen such that any expected combination of vertical and horizontal loads does not exceed the friction force between the interfaces such that all components remain in position. It will be appreciated that the plug 212 may be positioned at any point horizontally along the base of the nacelle 210, but is preferably positioned below the centre of gravity of the assembly.

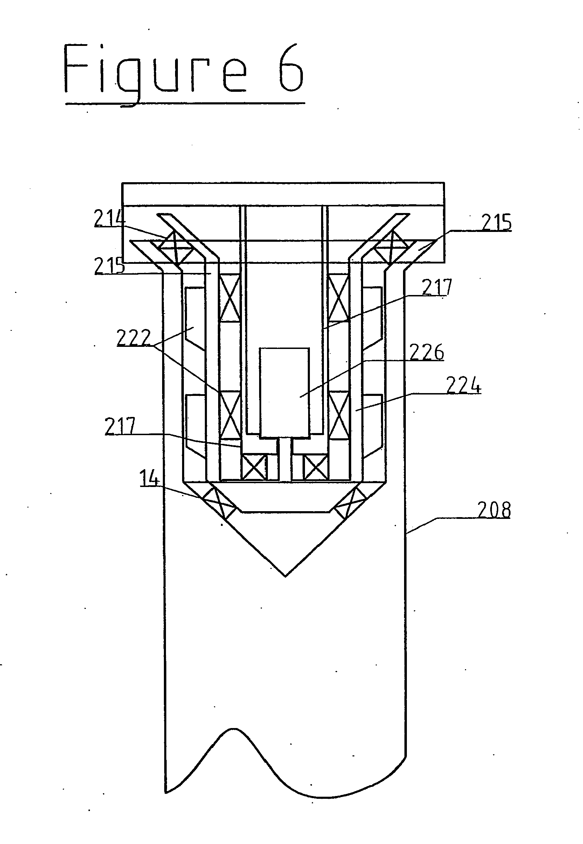

Thus, once the plug 212 is lowered into the socket 208, the outer section 215 does not move significantly, where the inner section 217 does (as shown in Figure 6). This is due to the different frictional characteristics of the respective bearings as outlined in detail later in the description. It will also be appreciated that in an alternative embodiment, and one in which the functionality of the arrangement is the same, the socket may be lowered onto a plug fixedly connected to the sea bed.

The plug 212 is also cone shaped in the vicinity of the tip to aid installation. The outer part of the plug 212 comprises an outer bearing surface 214, which is a compressible material such as rubber which allows for misalignment when locating the plug 212 into the socket 208, and will also allow for manufacturing tolerances, wear, corrosion and marine growth. Additionally or alternatively, a splined arrangement may be provided between the outer surface of the plug 212, and the inner surface of the socket 208 which further resists rotation therebetween. However, it will be appreciated that the more complex interface provided between the plug 212 and socket 208 reduces the ability for misalignment, marine growth etc. Locating shims 222 (visible with reference to Figure 6) may be used on the outer surface of the plug 212 to allow for less rigorous tolerances in the dimensions of the plug and to aid in positioning of the plug 212 in the socket 208. The inner part of the plug 212 may contain ballast which is provided to orientate the structure correctly and will act as a keel for the overall structure during transportation. Once the plug 212 is located into the socket 208, an electrical connection between the plug 212 and socket 208 is made. The connection may be of any type, however a further plug and socket type connection (not shown) is preferred.

In order to locate the plug 212 into the socket 208, there is provided a lift attachment on the turbine nacelle such as a hook or loop onto which a cable may attach. Ideally, the attachment should be located directly above the plug 212 to ensure operational stability and ease of installation. A boat, for example, can then lower the nacelle and plug arrangement down into the socket 208 which is fixedly attached to the ground via the base 202.

Inside the plug 212 is provided a section that rotates relative to the plug 212 on a set of bearings 224. The degree of friction of these inner bearings 224 is significantly less than the frictional force between the plug and socket, and the turbine nacelle 210 attaches to this rotationally mounted section. This therefore enables the turbine nacelle 210 to rotate relative to the fluid flow and thus can be aligned in the water such that the optimum amount of energy may be transferred into useful energy. By housing these bearings 224 as part of the plug, the servicing is easier as the entire system may be lifted as one rather than having to employ divers to carry out servicing which is both expensive dangerous and limits in the repairs that can be carried out. There is further provided means to flush debris from the bearings 224, which may be anything suitable for this purpose such as a means to cause a jet of water to be pushed through the bearings 224 at a high velocity to dislodge any debris therein. Alternatively, the bearings could be self cleaning. There could also or alternatively be a system of abrasive surfaces that come into contact with the bearing on rotation.

A further advantageous feature of the arrangement is the provision of seals between the internal surface of the socket 208 and the outer section 215 of the plug 212. A skirting/debris shroud could surround the top of the plug to prevent ingress of debris, sediment and marine life interfering with the system. A further seal may be provided between the outer section 215 of the plug 212 and the inner section of the plug 212. The plug 212 can be assembled on shore, thus a lip seal (not shown) can be positioned to protect the inner bearings 224. The seal to protect the outer bearing surface 214 will be fitted as required in situ. The two seals allow the inside of the plug 212 to be flooded with clean water to reduce corrosion due to salt conditions and to reduce the build up of marine growth. The water pressure will be slightly above that of the surrounding environment so that any leakage is outwards. The unit could be fitted with a clean water supply tank to continue this clean system. Alternatively, this sealed section could be filled with biodegradable oil to aid removal of marine growth.

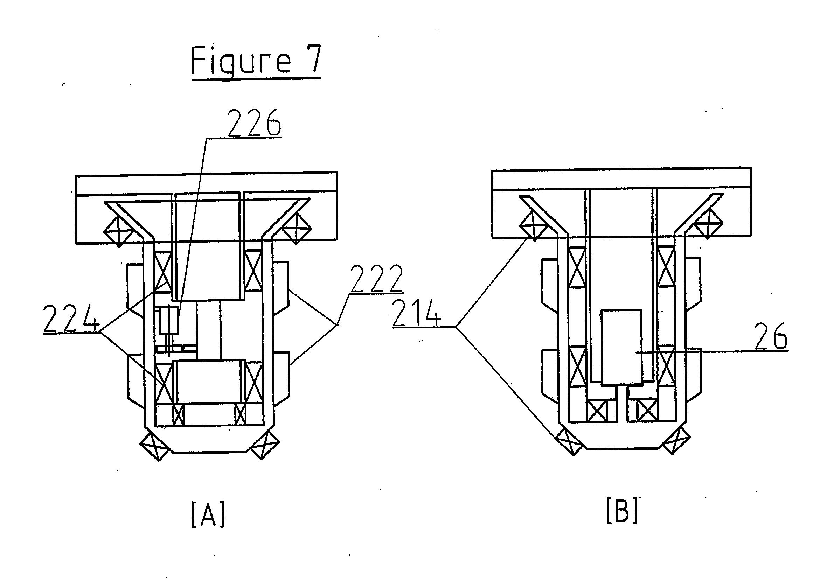

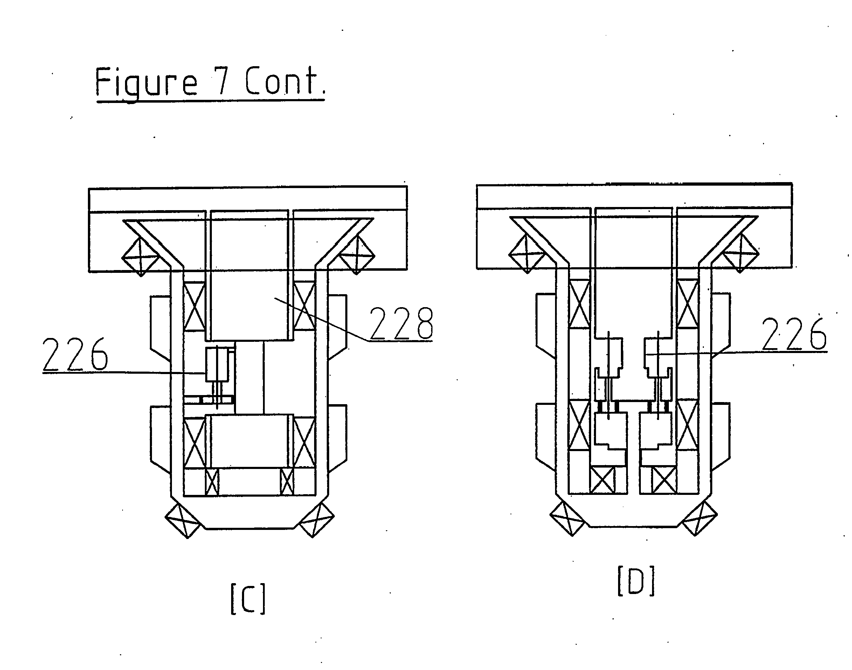

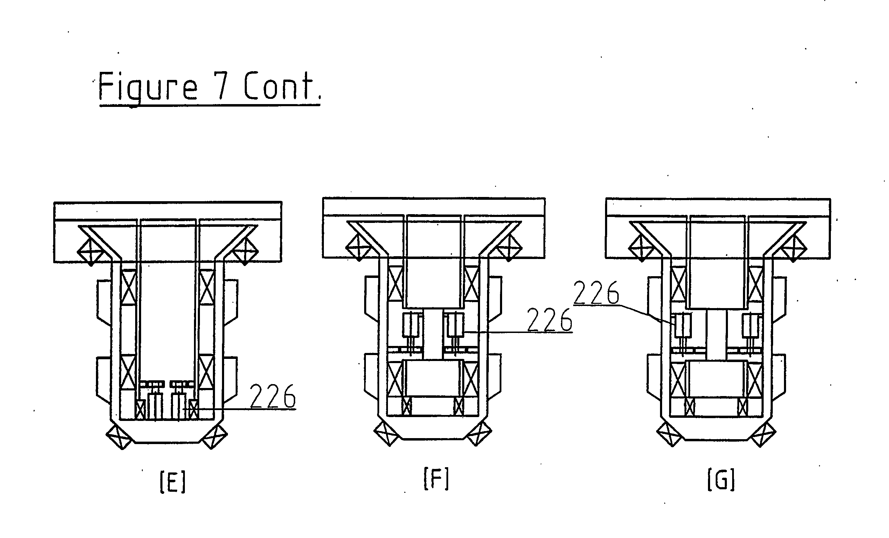

The bearing set 224 (as shown in Figures 6 and 7) are preferably water lubricated polymer bearings which have a relatively high degrees of friction, meaning that the turbine nacelle 210 will not rotate uncontrollably relative to the base. Specific suitable materials are envisaged to be composites, rubber, phosphor bronze, resin impregnated cotton or phenolic as examples having suitable properties. Alternatively, or in addition, there may be provided a drive system 226 which is powered and enables the turbine nacelle 210 and the base 202 to be rotated relative to each other. However, in certain embodiments, the hydrodynamic drag will cause the device to yaw into the correct orientation meaning the motor is not required.

Referring in particular to Figure 7 where seven alternative arrangements are shown, the drive system 226 can be a single motor (shown in Figures 7a-c) or a number of motors (shown in Figures 7d-g), which can in turn be electrical or hydraulic. Spur gears are driven by the motor(s) against a ring gear, or in the case of a single motor the sections are connected by a shaft. The motor(s) may incorporate a system of gears. An alternative system for rotating the turbine nacelle 210 and base 202 relative to each other could employ a series of bushes that could be moved independently to rotate about an axis in a similar manner to a folding fan.

A major advantage of the system is that there is no fixed orientation of the outer section 215 of the plug 212 for locating in the socket 208. However, once in position a means to determine orientation relative to the socket 208 may be provided.

The means to detect the rotational position of the turbine nacelle 210 relative to the base 202 could be an optical device (and may have a number of optical reading devices on one surface and a sequence of patterns on an adjacent surface), an electromechanical sensor, or alternatively in some applications a magnetic positioning system or similar. A stepper motor or indexing ring with teeth could be used in one embodiment, however this may be susceptible to marine growth. The inner part 228 of the plug 212 may include additional ballast material which will correctly orientate the structure to which it is connected and will act as a keel for the plug 212 during transportation.

When the device is stationary and in the desired orientation, any horizontal load on the system increases the friction limit of the inner bearings so that there is no unexpected rotation of the rotationally mounted section. One example of undesired rotational loads would be the action of waves above the system. Another would be variations in yaw and teeter on the rotor of a tidal stream turbine when in power generating conditions. Prevention of rotation of the rotationally mounted section under small yawing forces significantly reduces fatigue loading and "fretting" effects on the motor(s) and gearing system.

When the device is stationary and not in the desired orientation, horizontal loads increase the friction as above, but it is expected that the undesired rotational loads are significant and above the friction limit of the inner bearings. In this case, the motor drive connecting the plug and moving section could be locked in place (electrically or hydraulically) to provide additional torque. One example of this scenario is a tidal stream turbine which is not oriented with the tidal stream, and there is a flow of water present.

When there are no horizontal loads on the system, the drive system can create a large torque between the moving section and the plug. This torque exceeds the friction limit of the bearings and so rotates the system mounted on the moving section relative to the base. One example of this situation is the yawing of a tidal steam turbine at slack water.

The motors could use an hydraulic accumulator or battery system to rotate the device in the absence of an external power supply when power is not being created by the turbine system or similar device. When the turbine is running, the motor(s) can be employed to further resist any external yawing forces experienced.

In the case of a system immersed in a flowing fluid where the device is employed to align the system with the flow, the yaw motor(s) could be replaced by hydrodynamic control devices such as a long tail fin that would automatically align the system with the fluid flow.

In some configurations, it may be advantageous to include an electrical connection within the system. Electrical contacts would be fitted to both plug 212 and socket 208 and when the unit is lowered into place power from the generator can be routed through it. The contacts would have to be flexibly mounted to address any misalignment that may be within the system. In one configuration, the contacts would be incorporated into the compressible bearings 214. Control signals could be routed by the same method, or they could use a short range wireless connection or optical communication across the gap between the components.

The present invention has been described by way of example only, and it will be appreciated by a person skilled in the art that modifications and variations may be made to the present invention without departing from the scope of protection afforded by the appended claims. It will furthermore be appreciated that features of each aspect of the present invention as described may be combined with other aspects of the present invention as all features are entirely compatible.

## Claims

1. A turbine and support for fixing to the ground, said turbine and support comprising complementary male and female engaging portions such that when the turbine is lowered onto the support, the male and female portions contact thereby providing an operational engagement therebetween.

2. Apparatus according to claim 1, wherein the female engaging portion comprises a socket, the internal configuration of the socket being generally cone shaped.

3. Apparatus according to claim 2, wherein in the greatest cross sectional area of the cone is located at the rim of the socket.

4. Apparatus according to any of claims 1 or 2, wherein the internal configuration of the socket has a decreasing diameter from the rim, comprising a frustoconical, cylindrical and conical configuration respectively.

5. Apparatus according to claim 1 or 2, wherein the support further comprises an elongate member and a base member arranged and configured to be secured to the ground.

6. Apparatus according to any of claims 1-5, further comprising a spacing means on at least a portion of the outer surface of the male engaging portion, arranged and configured when in use to aid location of the male engaging portion into the female engaging portion.

7. Apparatus according to claim 6, wherein said spacing means includes at least one first bearing.

8. Apparatus according to claim 6, wherein said spacing means comprises a compressible material.

9. Apparatus according to claim 1, wherein said female portion is shaped and configured to receive the male portion in a specific orientation.

10. Apparatus according to any of claims 1-9, wherein the male engaging portion comprises a rotatably mounted member arranged to fixedly connect to the turbine; and optionally wherein a second set of bearings is located between the rotatably mounted member and an inner surface of the male engaging portion.

11. Apparatus according to any of claims 7 and 10, wherein said first and second bearing set has different friction characteristics.

12. Apparatus according to any of claims 9-10 further comprising a motive means within said male engaging portion arranged to rotate the turbine.

13. Apparatus according to any of claims 7-13 further comprising a sealing means arranged and configured to prevent unwanted matter entering said bearings.

14. Apparatus according to any of claims 6 or 9-10 further comprising means to flush unwanted matter from said spacing means and/or said bearings.

15. Apparatus according to claim 9 wherein the female engaging portion comprises a rotatably mounted member arranged to fixedly connect to the turbine.
